# EUROPEAN PATENT APPLICATION

(11) **EP 1 754 933 A1**
(43) Date of publication of application: **21.02.2007**
(21) Application number: 06119059.1
(22) Date of filing: 17.08.2006
(51) Int. Cl.: F21V 21/088, F21L 14/02

(54) **Lighting Device for Military Use**

(30) Priority: 18.08.2005 IL 17034505; 30.08.2005 IL 17057205
(71) Applicant: Eltam Ein Hashofet, Israel (IL)
(72) Inventor: Shofar, Ya'akov, 19237, Kibbutz Ein Hashofet (IL)
(74) Representative: Betten & Resch

(57) **Abstract**

There is provided a portable lighting device including an arrangement for releasable attachment to a stationary surface. The device includes a housing at least partly enclosing lighting elements and a base plate, mountable onto the stationary surface. The housing and base plate are securely joinable together by a first pin and a second pin and a first hook and a second hook, at least one of the hooks is swivable, and the housing and base plate are separable by releasing the grip of a swivable hook from a pin.

## Description

### Field of the Invention

The present invention relates to a lighting device, and more particularly, to a portable lighting device including an arrangement for releasable attachment to a stationary surface, suitable for military use, especially for use in vehicles.

### Background of the Invention

There often exists a need, both for military and civilian purposes, to utilize a lighting device which can provide illumination inside an enclosure, e.g., inside a vehicle or a room, wherein the device is secured to the ceiling or a wall and is normally fed from an external energy source. The lighting device, on the one hand, should be securely mounted and affixed inside the vehicle, and on the other hand, should have the capability of being easily and quickly dismountable from its mounting, and hence, also usable as a portable independent light source energized by its internal energy source, e.g., a rechargeable battery or a chargeable capacitor.

### Disclosure of the Invention

According to the invention there is provided a portable lighting device including an arrangement for releasable attachment to a stationary surface, comprising a housing at least partly enclosing lighting elements, a base plate, mountable onto said stationary surface, said housing and base plate are securely joinable together by a first pin and a second pin and a first hook and a second hook, at least one of said hooks being swivable, said housing and base plate are separable by releasing the grip of a swivable hook from a pin.

There is also provided a portable lighting device including an arrangement for releasable attachment to a stationary surface, comprising a rack, to which portable lighting elements are attachable on one of its sides, and including a first pin and a spaced-apart second pin, accessible from another side of said rack, a base plate, mountable onto said stationary surface, including a first hook engageable with said first pin, and a spaced-apart swivable hook engageable with said second, pin, said rack and base plate are securely joinable together by said pins and hooks and are separable by releasing the swivable hook from its grip of said second pin, and pulling away the rack from said first hook.

### Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purpose of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Fig.1: is a perspective, exploded view of a preferred embodiment of the lighting device according to the present invention, in its dismounted state;
- Fig. 2: is a perspective view of the rack and pins of the device of Fig. 1;
- Fig. 3: is a cross-sectional view of the base plate of the device of Fig. 1;
- Fig. 4: is a perspective view of the spring of the base plate of the device of Fig. 1;
- Fig. 5: is a perspective view of the device of Fig.1 in its mounted state;
- Fig. 6: is a cross-sectional view of the device of Fig. 5;
- Fig. 7: is a perspective view of the device of Fig.1 in its semi-mounted state;
- Fig. 8: is a cross-sectional view of the device of Fig. 7;
- Fig. 9: is an exploded view of a further embodiment of the invention;
- Fig. 10: is a cross-sectional view of the embodiment of Fig. 9 in a semi-mounted state, and

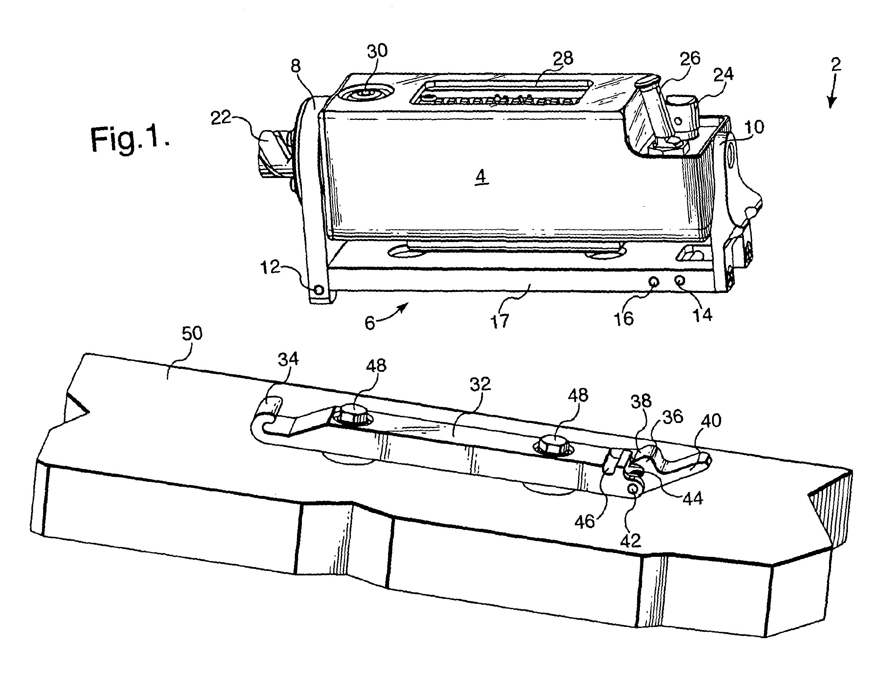

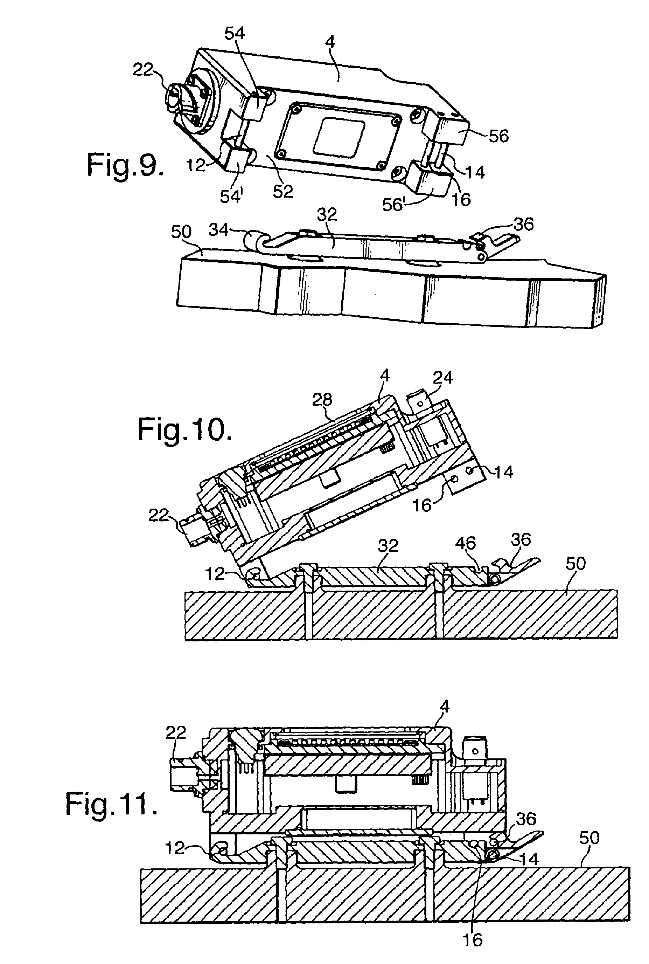

- Fig. 1: 1 is a cross-sectional view of the embodiment of Fig. 9 in a mounted state.

### Detailed Description of the Preferred Embodiments

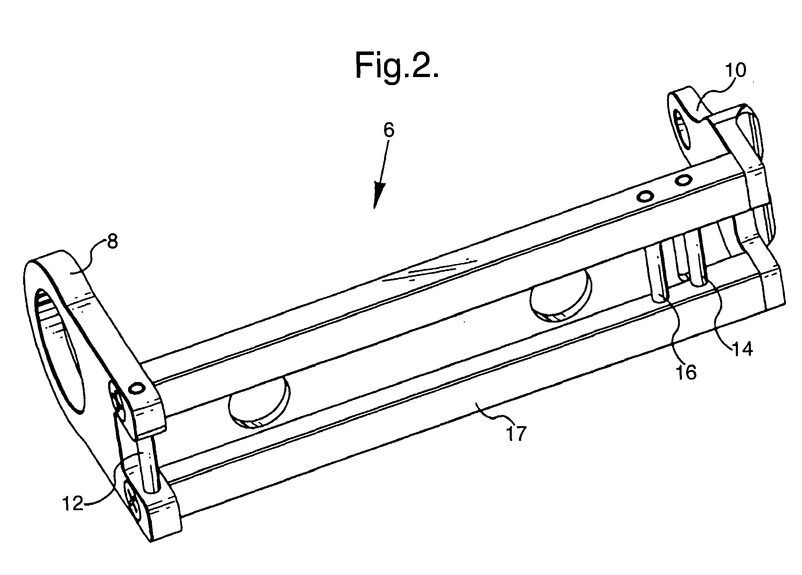

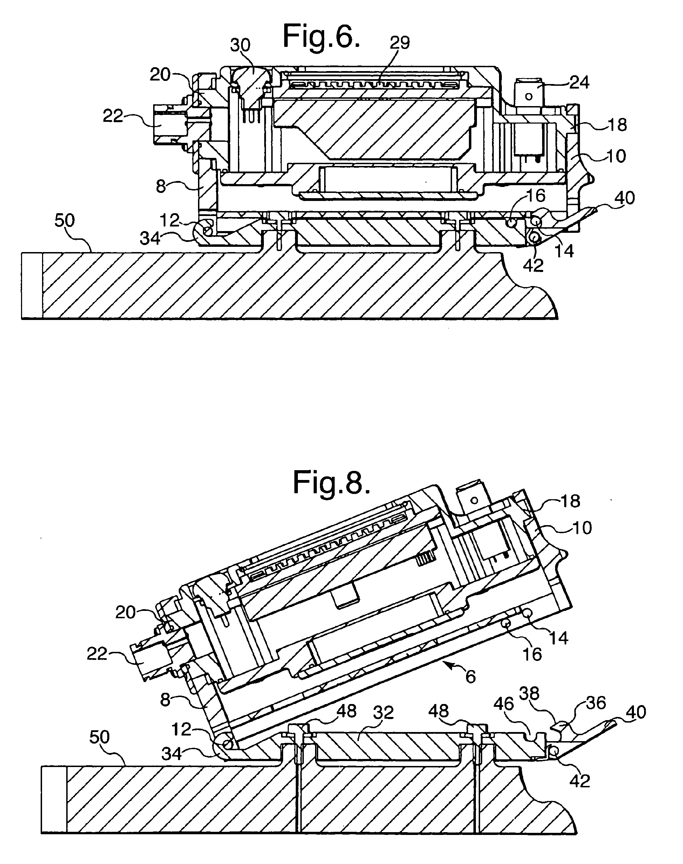

Referring now to the drawings, there is seen in Figs. 1 to 6, a lighting device 2, including an arrangement for releasably attaching the portable lighting device to a stationary surface. The arrangement includes a portable housing 4 for enclosing lighting elements, a rack 6 having lateral supports 8, 10, a first pin 12 fixedly attached to support 8 and second and third pins 14 and 16, spaced-apart from pin 12. All pins, seen to best advantage in Fig. 2, are fixedly attached to a base 17 of rack 6. The housing 4, having coupling members, e.g., pivots 18, 20 (Fig. 6), is mounted on the rack 6. Pivot 18 is mounted on lateral support 10 and pivot 20 is mounted on the lateral support 8, thereby allowing the housing 4 to swivel. There is also provided an extension of pivot 20 forming an electrical port 22 through which electrical energy can be fed into the lighting elements via wires (not shown). Knobs 24 and 26 mounted on housing 4 serve to control the lighting actuation and intensity, respectively. Transparent panel 28 provided on top of housing 4 serves to transmit the light produced by the light sources 29, e.g., light emitting diodes, installed in housing 4. Pushbutton 30 mounted on housing 4 serves to activate the internal energy sources, e.g., battery and/or capacitor, installed therein as required.

A detailed example of the lighting elements, e.g., light emitting diodes (LEDs) and source of energization will be described hereinafter. The light sources 29, advantageously consist of an array of 32 white LEDs interlaced with 16 colored LEDs, e.g., blue (wavelength ~ 470nm), green, red or infrared LEDs providing an active LED area of approximately 30 x 68 mm. The 32 white LEDs are energized from a 160mA, 14VDC source, while the 16 colored LEDs 26 are energized from 100mA, 14VDC source. The desired luminous intensity of each white LED is typically ~ 400 mcd at 120 degrees. The white LEDs provide light for general activity, e.g., map reading, orientation, etc. during daytime and nocturnal non-combat activities, whereas the blue LEDs provide light for nocturnal combat activity. The advantage of blue light during combat activity is that blue light is less detectable by night vision equipment of the enemy in the event that some of it leaks out through openings in the vehicle, e.g., a periscope. Alternatively, red (wavelength ~ 630nm) LEDs may be used instead of the blue ones during nocturnal activity. The advantage of red light is that, although detectable by night vision equipment, it does not impair the high sensitivity of the adaptivity of the human eye to darkness.

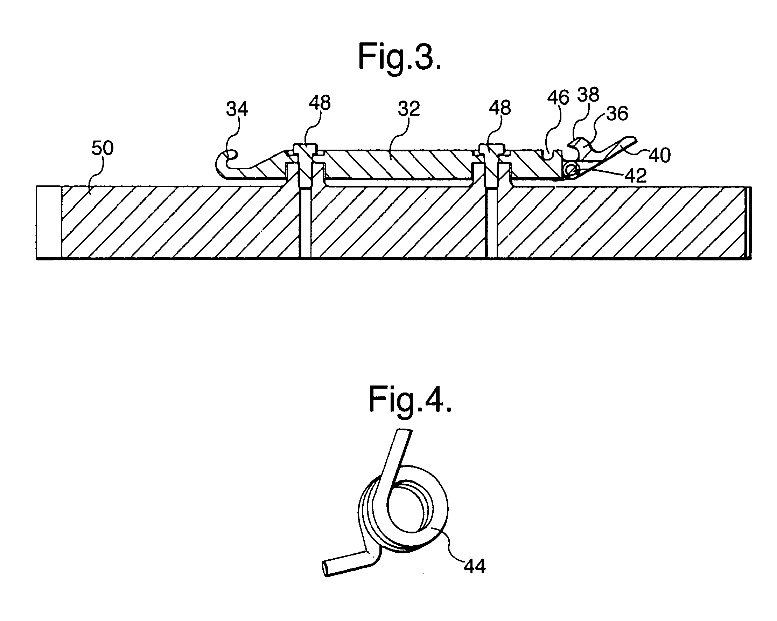

Another component of the lighting device 2 is a base plate 32 having at its ends a fixed hook 34 and a movable hook 36 furnished with an external smooth surface 38. The hook 36 has a lever 40 rotatably mounted on base plate 32 about a pivot 42. A helical spring 44 (Figs. 1 and 4) is coupled with lever 40 and base plate 32, biasing hook 36 to an extreme disposition, as depicted in the drawings. Further seen, is a groove 46 configured to partly accommodate pin 16. Bolts 48 secure plate 32 to a stationary surface 50.

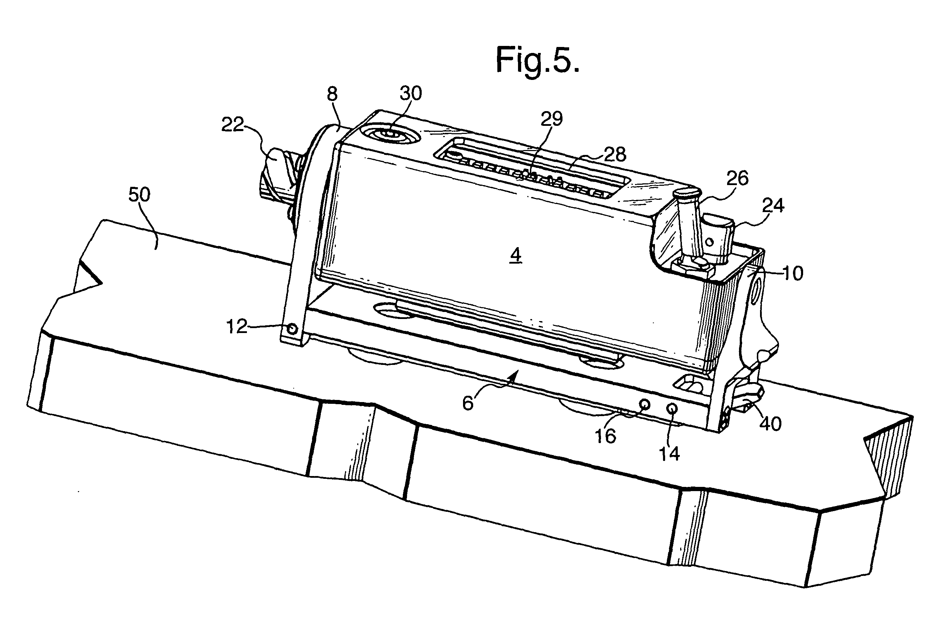

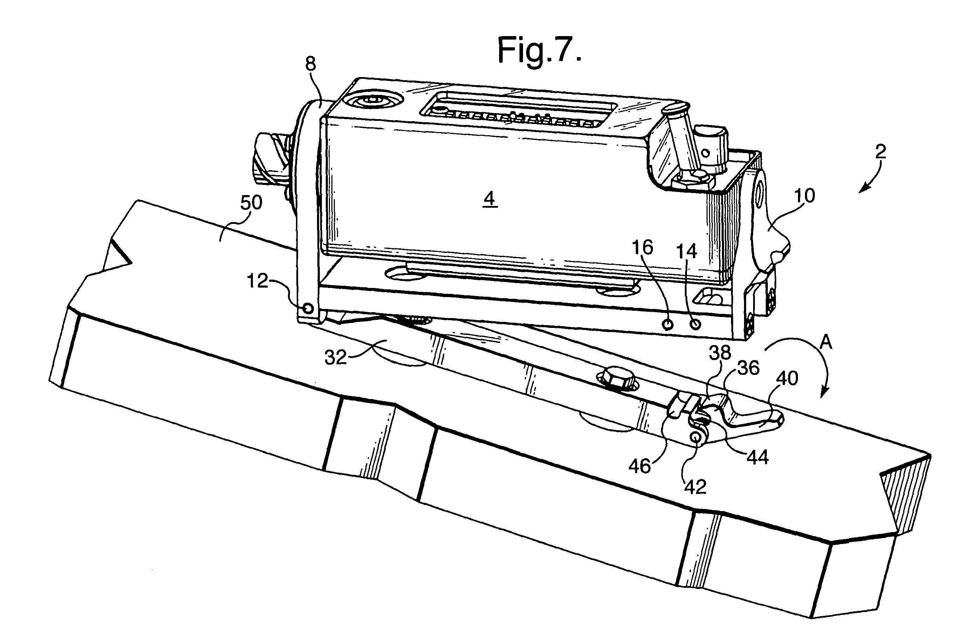

Figs. 5 and 6 illustrate the lighting device 2 in its fully mounted state for its utilization as a fixed lighting device in a room or a vehicle, where it is advantageously electrically fed from an external energy source through port 22. The operations leading to this state from the state illustrated in Fig. 1, is depicted in Figs. 7 and 8 and include rotating the housing 4 about pin 12, as a pivot inserted in hook 34, until pin 14 engages the smooth external surface 38 of hook 36 on which the pin 14 slides. While sliding, pin 14 causes hook 36 to swivel against the force of helical spring 44 in the direction of arrow A until attaining a position enabling pin 14 to engage hook 36 and firmly couple with it. Simultaneously, pin 16 enters groove 46. Therefore, in this state, pins 12 and 14 are, respectively, held by hooks 34 and 36, and pin 16 rests in groove 46, preventing portable housing 4 from moving along base plate 32 when subjected to strong vibrations. Since hook 36 is held in place mainly by the force of spring 44, pin 16 and groove 46 prevent unintentional release of portable housing 4 from base plate 32.

While in Figs. 1 to 8 there has been disclosed a preferred embodiment of the lighting device and arrangement according to the present invention, it should be realized that in cases where it is not necessary to provide a lighting device which is capable of swiveling when attached to the stationary surface 50, the rack 6 can be disposed of.

Illustrated in Figs. 9 to 11 is an embodiment in which the portable housing 4 is directly attached to the base plate 32. For this purpose, the bottom side 52 of the housing 4 is provided with legs 54, 54', 56, 56' supporting pins 12, and 16, 14, respectively.

The manner of attaching the housing 4 to the base plate 32 and the removal therefrom, is the same as in the embodiment according to Figs. 1 to 8.

It should be realized that while for manufacturing reasons the housing 4 includes the pins 12, 14 and 16, and the hooks 34 and 36 are associated with the base plate 32, the association of the pins and hooks with the housing and base plate could just as well be reversed, namely, the hooks could be associated with the housing 4 while the pins associated with the base plate.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

An embodiment may be summarized as portable lighting device including an arrangement for releasable attachment to a stationary surface according to the accompanying claims substantially as hereinbefore described and with reference to the accompanying drawings.

## Claims

1. A portable lighting device including an arrangement for releasable attachment to a stationary surface, comprising:
a housing at least partly enclosing lighting elements;
a base plate, mountable onto said stationary surface;
said housing and base plate are securely joinable together by a first pin and a second pin and a first hook and a second hook, at least one of said hooks being swivable, said housing and base plate are separable by releasing the grip of a swivable hook from a pin.

2. The device as claimed in claim 1, wherein said housing includes on one of its sides a first pin and a spaced-apart second pin and said base plate includes a first hook engageable with said first pin, and a spaced-apart swivable hook engageable with said second pin.

3. The device as claimed in claim 1 or 2, wherein said swivable hook has a lever angularly manipulatable between a first end position and a second end position.

4. The device as claimed in claim 3, wherein said swivable hook retains its grip of said second pin by a force of a spring.

5. The device as claimed in claim 4, wherein said swivable hook includes an external surface on which said second pin is slidable during the attachment of the lighting device, causing said swivable hook to swivel against the force of said spring until attaining a position enabling the second pin and the swivable hook to firmly engage.

6. The device as claimed in one of claims to 5, wherein said housing includes a third pin configured to be at least partly accommodated in a groove formed in said base plate.

7. The device as claimed in one of claims 1 to 6, further comprising a rack having coupling members for pivoting the housing to the rack for facilitating relative swiveling, the rack including said pins.

8. The device as claimed in one of claims 1 to 7, wherein said housing is provided at its bottom with legs supporting said pins.

9. The device as claimed in one of claims 1 to 8, further comprising at least one light control knob.

10. The device as claimed in one of claims 1 to 9, further comprising at least one electrical port enabling connection to an external power source.

11. The device as claimed in one of claims 1 to 10, wherein said lighting device is self-powered.

12. The device as claimed in one of claims 1 to 11, wherein said housing includes at least one transparent panel.

13. The device as claimed in one of claims 1 to 12, wherein said lighting elements include at least one light-emitting diode enclosed by said housing.

14. The device as claimed in one of claims 1 to 13, wherein said lighting elements include at least one array of light emitting diodes consisting of at least two groups of diodes, at least one group emitting substantially white light and at least one group emitting colored light.

15. The device as claimed in claim 14, wherein said group of colored diodes are selected from the groups of diodes comprising blue, green, red or infrared light-emitting diodes.

16. The device as claimed in claim 14, wherein said colored light is operable for nocturnal combat activity.

17. A portable lighting device including an arrangement for releasable attachment to a stationary surface, comprising:
a rack, to which portable lighting elements are attachable on one of its sides, and including a first pin and a spaced-apart second pin, accessible from another side of said rack;
a base plate, mountable onto said stationary surface, including a first hook engageable with said first pin, and a spaced-apart swivable hook engageable with said second pin;
said rack and base plate are securely joinable together by said pins and hooks and are separable by releasing the swivable hook from its grip of said second pin, and pulling away the rack from said first hook.
